(19) Europäisches Patentamt
European Patent Office
Office européen des brevets

(11) **EP 2 249 044 B1**

(12) **EUROPÄISCHE PATENTSCHRIFT**

(45) Veröffentlichungstag und Bekanntmachung des Hinweises auf die Patenterteilung:
**28.08.2013 Patentblatt 2013/35**

(21) Anmeldenummer: **10008712.1**

(22) Anmeldetag: **06.10.2004**

(51) Int Cl.:
*F04D 29/68* *(2006.01)*

(54) **Strömungsarbeitsmaschine mit Fluidentnahme**

Compressor or pump with fluid extraction

Compresseur ou pompe avec extraction de fluide

(84) Benannte Vertragsstaaten:
**DE FR GB**

(30) Priorität: **26.11.2003 DE 10355240**

(43) Veröffentlichungstag der Anmeldung:
**10.11.2010 Patentblatt 2010/45**

(62) Dokumentnummer(n) der früheren Anmeldung(en) nach Art. 76 EPÜ:
**04023822.2 / 1 536 146**

(73) Patentinhaber: **Rolls-Royce Deutschland Ltd & Co KG**
**15827 Blankenfelde-Mahlow (DE)**

(72) Erfinder: **Gümmer, Volker**
**15831 Mahlow (DE)**

(74) Vertreter: **Weber, Joachim**
**Hoefer & Partner**
**Patentanwälte**
**Pilgersheimer Strasse 20**
**81543 München (DE)**

(56) Entgegenhaltungen:
**CH-A- 204 331      CH-A5- 561 844**
**DE-T2- 69 105 418      FR-A- 1 521 512**
**US-A- 2 738 921**

**Beschreibung**

Die vorliegende Erfindung bezieht sich auf Strömungsarbeitsmaschinen, wie etwa Bläser, Verdichter, Pumpen und Ventilatoren, sowohl in axialer, halbaxialer als auch in radialer Bauart. Das Arbeitsmedium oder Fluid kann gasförmig oder flüssig sein.

Im Einzelnen betrifft die Erfindung eine Strömungsarbeitsmaschine mit zumindest einem Rotor, wobei der Rotor mehrere an einer rotierenden Welle befestigte Rotorschaufeln umfasst. Es kann mindestens ein Stator existieren, wobei der Stator mit feststehenden Statorschaufeln versehen ist. Es muss ein Gehäuse existieren, welches die Durchströmung des Rotors und Stators mit einem Fluid nach außen begrenzt.

Die aerodynamische Belastbarkeit und der Wirkungsgrad von Strömungsarbeitsmaschinen, beispielsweise Bläsern, Verdichtern, Pumpen und Ventilatoren, wird durch das Wachstum und die Ablösung von Grenzschichten auf den Schaufeln sowie auf den Naben- und Gehäusewänden begrenzt.

Der Stand der Technik schlägt gegen dieses fundamentale Problem vor, die Grenzschicht des Fluids zu entfernen. Abgesehen von dieser sehr allgemeinen Vorgabe sind die vorbekannten Lösungen trivial und nur bedingt effektiv.

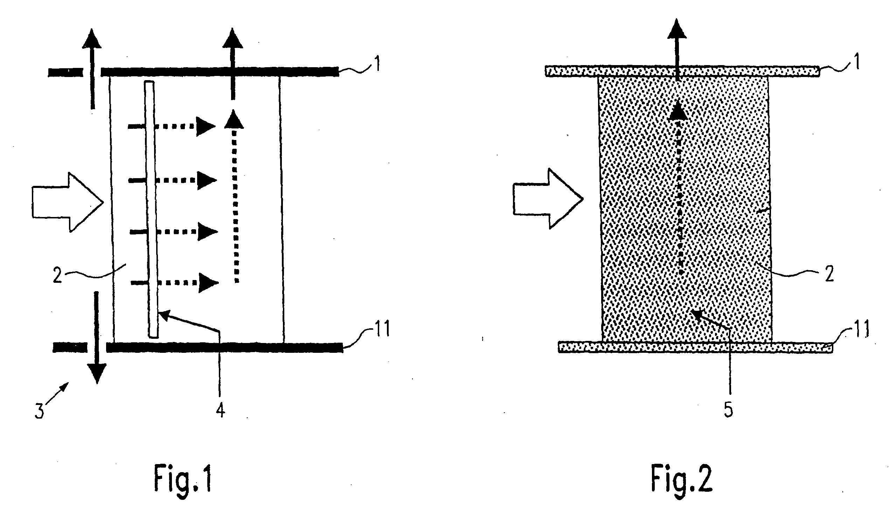

Die Fig. 1 und 2 zeigen in schematischer Darstellung einige aus dem Stand der Technik bekannten Lösungen. Dabei zeigt die Fig. 1 in schematischer Darstellung ein Gehäuse 1 und eine Nabe 11, zwischen welchen ein Fluid, wie durch den großen Pfeil dargestellt, von links anströmt. Das Bezugszeichen 2 zeigt in schematischer Darstellung eine Schaufel, deren sichtbarer Bereich die "Saugseite" bildet. Wie durch die nach oben gerichteten Pfeile der Fig. 1 gezeigt, erfolgt eine lokale Luftentnahme auf der Schaufelsaugseite und im Axialspalt in achsensymmetrischer Anordnung. Der nach unten gerichtete, linke Pfeil zeigt eine Luftentnahme, die bei einem Rotor oder Stator durch einen Umfangsschlitz 3 vor der Schaufel erfolgt. Das Bezugszeichen 4 zeigt eine Lösung, bei welcher bei einem Stator über einen Schlitz und bei einem Rotor über eine Perforation, einen Schlitz, Löcher oder einen Staueinlauf Luft entnommen wird.

Die Fig. 2 zeigt mit dem nach oben gerichteten Pfeil eine globale Luftentnahme durch poröse Schaufeloberflächen. Das Bezugszeichen 5 bezeichnet einen Stator mit einem feinporigen, schwitzfähigen Werkstoff.

Der Stand der Technik beschreibt somit unterschiedliche Methoden, die eine in Strömungsrichtung punktuell begrenzte Entnahme der Grenzschicht durch Schlitze oder Löcher auf der Schaufelsaugseite oder durch achsensymmetrische Schlitze an den Seitenwänden (Nabe, Gehäuse) vor der Schaufel vorsehen. Dabei ist, wie erwähnt, auch vorgeschlagen worden, bei Statoren die Luftabfuhr auf einer über die ganze Schaufeloberfläche verteilten, globale Grenzschichtabsaugung durch feinporiges Material vorzunehmen.

Diese beschriebenen Maßnahmen besitzen entweder keinerlei spezifische Ausrichtung auf strömungstechnisch besonders problematische Zonen innerhalb der Schaufelpassage oder orientieren sich an der einfachen Vorstellung von zweidimensionalen Profilumströmungen, ohne Berücksichtigung der komplizierten dreidimensionalen Strömungsvorgänge im Seitenwandbereich einer Schaufel (nahe an einer Nabe oder an einem Gehäuse).

Üblicherweise wird beim Stand der Technik die Grenzschicht zunächst ins Schaufelinnere geführt und dann aus der Schaufel und dem Ringkanal der Strömungsarbeitsmaschine entfernt.

Eine Lösung sieht die Absaugung auf der Schaufelsaugseite und ein direktes Wiedereinströmen an der Schaufelspitze derselben Schaufel vor.

Weiterhin existieren im Stand der Technik Entwürfe, die Umfangsschlitze vor oder hinter einer Schaufelreihe an einer Nabe oder einem Gehäuse vorsehen, um die dortige Seitenwandgrenzschicht abzusaugen. Diese Maßnahme richtet sich allein auf die Reduzierung der Grenzschichtdicke am Schaufeleintritt ohne spezifische Ausrichtung auf besonders problematische Seitenwandzonen innerhalb der Schaufelpassage.

Der oben beschriebene Stand der Technik ist schriftlich in nachfolgenden Veröffentlichungen dokumentiert.

Zur Absaugung auf der Schaufeloberfläche durch Löcher, Einzelschlitze oder poröse Zonen sind die folgenden US-Patente zu nennen:

US 2,870,957
US 2,720,356
US 3,694,102
US 3,993,414
US 5,904,470
US 5,480,284

Die Absaugung an der Nabe oder am Gehäuse durch Umfangsschlitze vor oder hinter der Schaufelreihe zeigen folgende Veröffentlichungen:

Schuler et al.: Design, Analysis, Fabrication and Test of an Aspirated Fan Stage, ASME Paper 2000-GT-618, und Merchant et al.: Aerodynamic Design and Analysis of a High Pressure Ratio Aspirated Compressor Stage, ASME Paper 2000-GT-619.

Des Weiteren zeigen folgende Veröffentlichungen eine Grenzschichtabsaugung durch schlitzartige Öffnungen in den Seitenwänden im Bereich einer festen Verbindung zur Schaufel :

FR 1 521 512 A

CH 561 844 A5

DE 691 05 418 T2

Als nachteilig erweist es sich beim Stand der Technik, dass die existierenden Lösungen keine hochwirksamen und insbesondere hinsichtlich des Wirkungsgrades der Strömungsarbeitsmaschine günstige Lösungen bilden. Vielmehr sind die existierenden Absaugekonzepte vergleichsweise primitiv und sehen entweder die alleinige Absaugung der Profilgrenzschichten auf der Schaufeloberfläche vor oder kombinieren dies mit einer Absaugung vor der Schaufelreihe durch achsensymmetrische Ringschlitze an Nabe oder Gehäuse.

Der Erfindung liegt die Aufgabe zugrunde, eine Strömungsarbeitsmaschine der eingangs genannten Art zu schaffen, welche unter Vermeidung des Standes der Technik eine sehr wirkungsvolle Grenzschichtentfernung sowie einen hohen Wirkungsgrad aufweist.

Erfindungsgemäß wird die Aufgabe durch die Merkmalskombination des Hauptanspruchs gelöst.

Die erfindungsgemäße Strömungsarbeitsmaschine kann eine oder mehrere Stufen mit jeweils einem Rotor und einem Stator umfassen, in Einzelfällen wird die Stufe lediglich durch einen Rotor gebildet.

Erfindungsgemäß besteht der Rotor aus einer Anzahl von Schaufeln, die mit der rotierenden Welle der Strömungsarbeitsmaschine verbunden sind und Energie an das Arbeitsmedium abgeben. Der Rotor kann mit oder ohne Deckband am äußeren Schaufelende ausgeführt sein. Der erfindungsgemäße Stator besteht aus einer Anzahl feststehender Schaufeln, die nabenseitig und gehäuseseitig mit festem oder freiem Schaufelende ausgeführt sein können.

Die erfindungsgemäß vorgesehene Rotortrommel und die Beschaufelung sind von einem Gehäuse umgeben.

Erfindungsgemäß kann die Strömungsarbeitsmaschine auch einen Stator vor dem ersten Rotor aufweisen, ein so genanntes Vorleitrad.

Erfindungsgemäß kann mindestens ein Stator oder Vorleitrad abweichend von der unbeweglichen Fixierung auch drehbar gelagert sein, um den Anströmungswinkel zu verändern. Eine Verstellung erfolgt beispielsweise durch eine von außerhalb des Ringkanals zugängliche Spindel.

In besonderer Ausgestaltung kann die Strömungsarbeitsmaschine mindestens eine Reihe verstellbarer Rotoren aufweisen.

In einer alternativen Ausgestaltung der erfindungsgemäßen Strömungsarbeitsmaschine kann auch vorgesehen sein, dass diese bei Mehrstufigkeit zwei gegenläufige Wellen besitzt, so dass die Rotorschaufelreihen von Stufe zu Stufe die Drehrichtung wechseln. Hierbei existieren keine Statoren zwischen aufeinander folgenden Rotoren.

Erfindungsgemäß kann die Strömungsarbeitsmaschine alternativ auch eine Nebenstromkonfiguration derart aufweisen, dass sich der einstromige Ringkanal hinter einer bestimmten Schaufelreihe in zwei konzentrische Ringkanäle aufteilt, die ihrerseits mindestens jeweils eine weitere Schaufelreihe umfassen.

Erfindungsgemäß ist somit im Einzelnen eine Strömungsarbeitsmaschine geschaffen worden, die Mittel zur Entnahme von Fluid an mindestens einer Schaufel einer Schaufelreihe des Rotors und/oder des Stators an nicht-achsensymmetrisch angeordneten, aerodynamisch kritischen Orten auf Schaufelspitzen- und Ringkanaloberflächen (SRO) umfasst.

Zusätzlich zu Fluidentnahmevorrichtungen an SRO weist die Strömungsarbeitsmaschine optional an mindestens einer Schaufel einer Statorreihe Mittel zur Fluidentnahme auf, die auf der Schaufelsaugseite in Meridianströmungsrichtung nicht punktuell, sondern über einen definierten Bereich verteilt angelegt sind, und deren Meridianerstreckung in Meridianstromlinien oder orthogonaler Richtung zu wenigstens einer der Ringkanalwände (Nabe oder Gehäuse) hin abnimmt (saugseitige, intensitätsvariable Fluidentnahme SIFE).

Aus den folgenden Abbildungen betreffen lediglich Fig. 14 bis 17 die Erfindung. Dabei zeigt:

Fig. 1          eine schematische Darstellung des Standes der Technik,

Fig. 2          eine abgewandelte Darstellung eines weite- ren aus dem Stand der Technik bekannten Beispiels,

Fig. 3          eine schematische Darstellung eines Grundkonzepts,

Fig. 4          eine weitere Darstellung unterschiedlicher Varianten,

Fig. 5          verschiedene Varianten und Konfigurationen der erfindungsgemäßen Strömungsarbeitsma- schine,

Fig. 6       eine Darstellung zur erfindungsgemäßen De- finition des Begriffs SRO,

Fig. 7       eine weitere Darstellung zur erfindungsge- mäßen Definition von SRO,

Fig. 8 bis 10       unterschiedliche Ausgestaltungsformen von Kammern zur Abführung des Fluids vornehm- lich vom Gehäuse aus,

Fig. 11 bis 13       Ausgestaltungsvarianten analog Fig. 8 bis 10 mit Kammern zur Abführung des Fluids vornehmlich von der Nabe aus,

Fig. 14 bis 17       erfindungsgemäße Ausführungsvarianten einer Fluidentnahmevorrichtung an Schaufelspitzen und Ringkanaloberflächen (SRO) des Typs A.

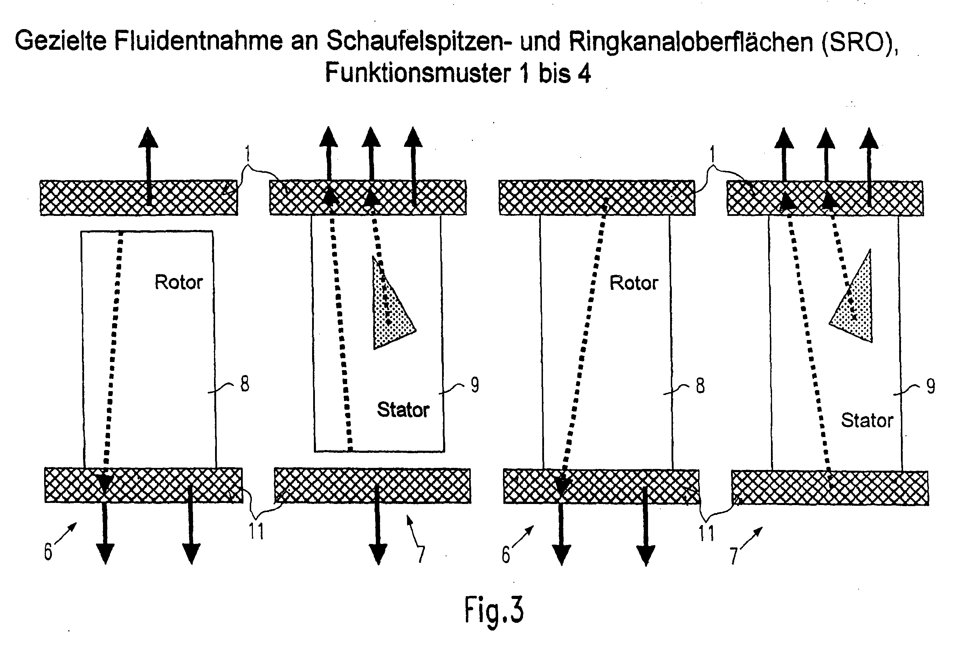

Die Fig. 3 zeigt in stark vereinfachter Darstellung eine Lösung an vier unterschiedlich konfigurierten Schaufelreihen, welche jeweils einen Rotor 6 bzw. einen Stator 7 umfassen, die mit Rotorschaufeln 8 bzw. Statorschaufeln 9 versehen sind. Mit dem Bezugszeichen 1 wird in stark vereinfachter Darstellung ein Gehäuse oder ein außen liegendes Deckband wiedergegeben. Das Bezugszeichen 11 kennzeichnet eine Rotortrommel oder ein innen liegendes Deckband. Dargestellt ist die Saugseite der jeweiligen Schaufel. Auf Statoren ist eine Zone für saugseitige, intensitätsvariable Fluidentnahme (SIFE) vorgesehen.

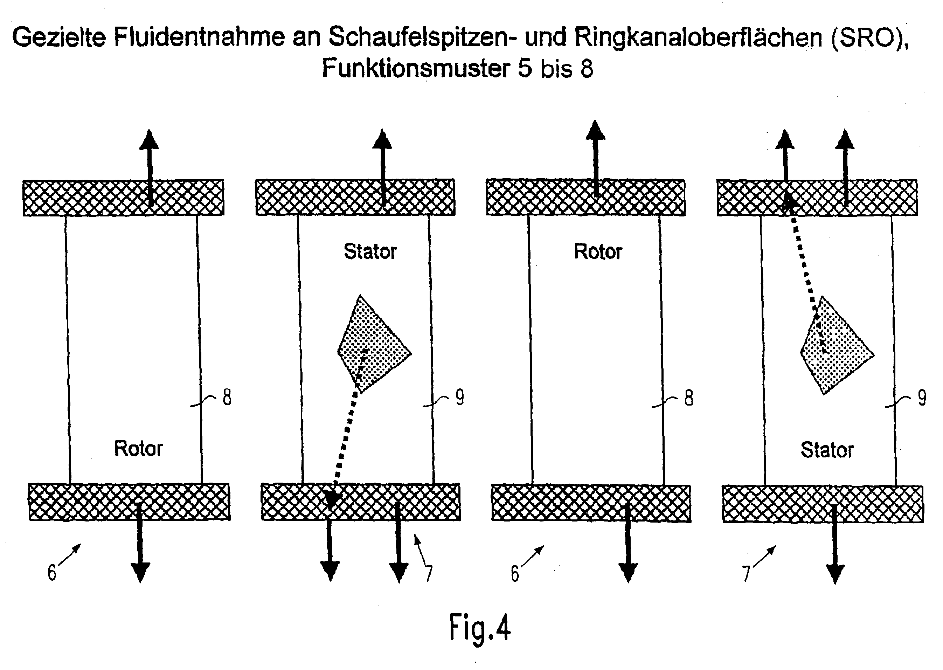

In analoger Weise zeigt die Fig. 4 ein Grundkonzept.

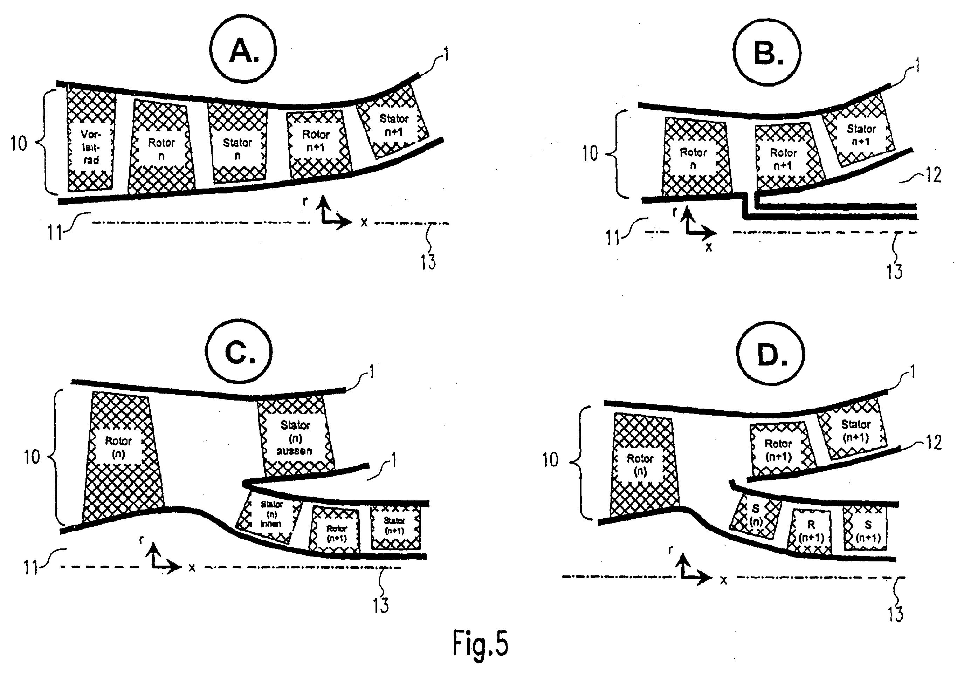

Die Fig. 5 zeigt vier verschiedene Konfigurationen der erfindungsgemäßen Strömungsarbeitsmaschine. Dabei bezeichnet das Bezugszeichen 10 einen von links nach rechts zu durchströmenden Ringkanal, mit dem Bezugszeichen 13 ist die Maschinenachse dargestellt, um welche sich eine Rotortrommel (Nabe) 11 dreht. Bei den in den Fig. 5B und 5D gezeigten Ausführungsbeispielen ist eine weitere Rotortrommel (Nabe) 12 vorgesehen. Die Rotoren, Statoren sowie das Vorleitrad sind jeweils in Fig. 5 beschriftet, es ist jeweils in schematischer Weise eine Schaufel dargestellt.

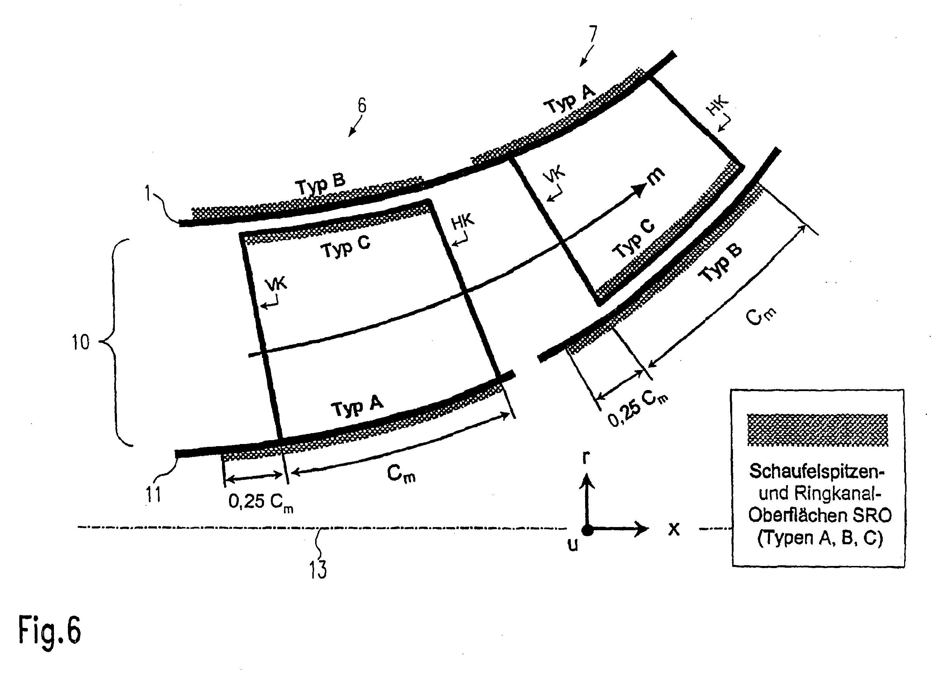

Die Fig. 6 zeigt die Definition der erfindungsgemäßen Schaufelspitzen- und Ringkanaloberflächen (SRO). Dabei sind insgesamt drei Typen dargestellt. Es ist wiederum vereinfacht ein Rotor 6 sowie ein Stator 7 gezeigt, die im Ringkanal 10 zwischen einem Gehäuse 1 und einer Nabe (Rotortrommel) 11 angeordnet sind.

Es ergeben sich somit folgende SRO-Typen:

SRO, Typ A: Die Oberflächen sind an der Naben- oder Gehäusekontur des Ringkanals mit fester Verbindung zur Schaufel ausgebildet, wie sie im Fall von Plattformen, Deckbändern, Bliskund Blingkonfigurationen auftreten, und zwar zwischen der Hinterkantenebene HK und einer Ebene, die sich 25 % der meridionalen Schaufelsehnenlänge Cm vor der Vorderkantenebene VK befindet.

SRO, Typ B: Die Oberflächen sind an Naben- oder Gehäusekonturen des Ringkanals 10 im Bereich freier Schaufelenden (oberhalb von Rotoren ohne Deckband oder unterhalb von Statoren ohne Deckband) zwischen der Hinterkantenebene HK und einer Ebene, die sich 25 % der meridionalen Schaufelsehnenlänge Cm vor der Vorderkantenebene VK befindet, ausgebildet.

SRO, Typ C: Die Oberflächen sind an Schaufeln an deren freien Schaufelenden ausgebildet, die der Naben- oder der Gehäusekontur des Ringkanals 10 zugewandt sind (Spitzenstirnflächen der Schaufel).

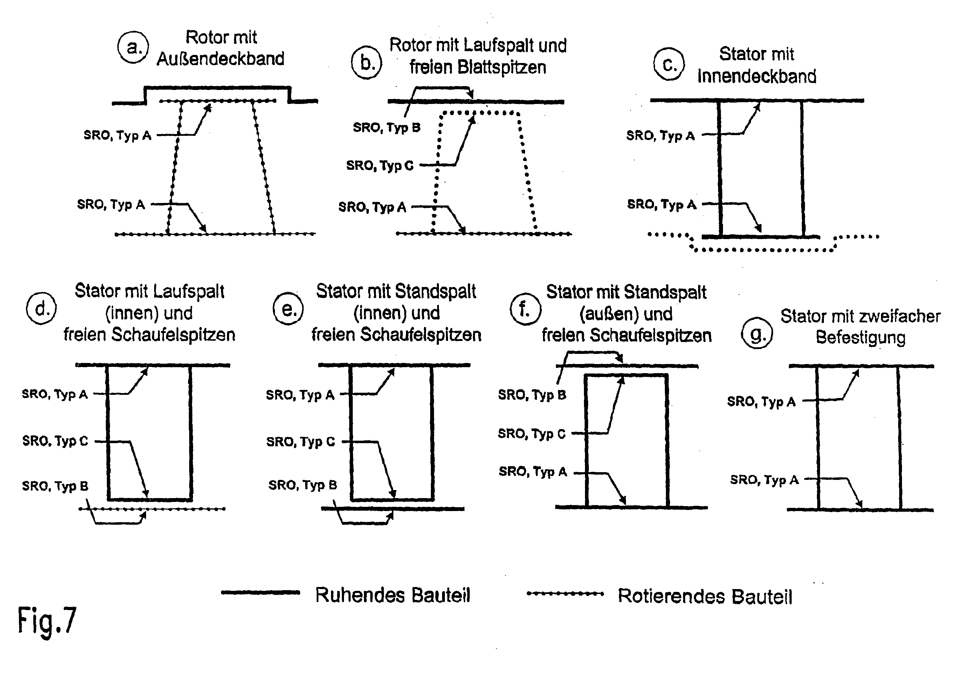

Die Fig. 7 zeigt unterschiedliche Ausführungen von Schaufelreihen der erfindungsgemäßen Strömungsarbeitsmaschine mit einer Kennzeichnung der wiederkehrenden Elemente SRO, Typ A, Typ B, Typ C. Im Einzelnen zeigen dabei die Beispiele Folgendes:

Die Fig. 7a zeigt eine Baugruppe, bestehend aus einer Rotortrommel, mit mehreren mit der Trommel rotierenden Rotorschaufeln, einem die Rotorschaufeln am äußeren Umfang umgebenden und mitrotierenden Deckband sowie einem die rotierenden Teile umgebenden und ruhenden Gehäuse.

Die Fig. 7b zeigt eine Variante mit einer Baugruppe, bestehend aus einer Rotortrommel, mehreren mit der Trommel rotierenden Rotorschaufeln mit freien äußeren Enden, sowie einem die rotierenden Teile umgebenden und ruhenden Gehäuse.

Die Fig. 7c zeigt eine Baugruppe, bestehend aus einem ruhenden Außengehäuse, mehreren mit dem Außengehäuse verbundenen Statorschaufeln, sowie einem von den Statorschaufeln am inneren Umfang getragenen Deckband und einer innerhalb der ruhenden Bauteile rotierenden Rotortrommel.

Die Fig. 7d zeigt eine Baugruppe, bestehend aus einem ruhenden Außengehäuse, mehreren mit dem Außengehäuse verbundenen Statorschaufeln mit freien inneren Enden und einer innerhalb der ruhenden Bauteile rotierenden Rotortrommel.

Aus Fig. 7e ist eine Baugruppe ersichtlich, welche aus einem ruhenden Außengehäuse, mehreren mit dem Außengehäuse verbundenen Statorschaufeln mit freien inneren Enden, und einem innerhalb der Statorschaufelreihe ruhenden Innengehäuse besteht.

Die Fig. 7f zeigt eine Baugruppe, bestehend aus einem ruhenden Innengehäuse, mehreren mit dem Innengehäuse verbundenen Statorschaufeln mit freien äußeren Enden, und einem die Statorschaufelreihe umgebenden Außengehäuse.

Die Fig. 7g verdeutlicht eine Baugruppe, welche aus einem ruhenden Innen- und Außengehäuse besteht, sowie mehreren mit dem Innen- und Außengehäuse verbundenen Statorschaufeln.

Die Führung des entnommenen Fluids erfolgt über Strömungswege an der Peripherie des Ringkanals oder innerhalb von Schaufeln und ihrer umgebenden Bauteile. Das Fluid wird dabei entweder bei freier Strömung oder aber mit Hilfe mindestens eines im Strömungsweg befindlichen Drosselorgans, das unverstellbar oder auch regelbar sein kann, aus dem Ringkanal im Bereich der betroffenen Schaufelreihe herausgeführt. Dieses Abführen des Fluids erfolgt mit dem Ziel, entweder das Fluid vollständig von der Strömungsarbeitsmaschine oder von der die Strömungsarbeitsmaschine einschließenden Gesamtanlage (Fördersystem, Gasturbine oder Triebwerk) zu entfernen, oder das Fluid dem Ringkanal der Strömungsarbeitsmaschine oder der Gesamtanlage wieder zuzuführen.

Die notwendigen Elemente des Strömungsweges können als einfacher Hohlraum, als Ringraum, als Rohrleitung, als Kanal, als Düse oder als Diffusor beliebiger Querschnittsform ausgestaltet sein und werden im Folgenden unter dem Begriff "Kammer" zusammengefasst.

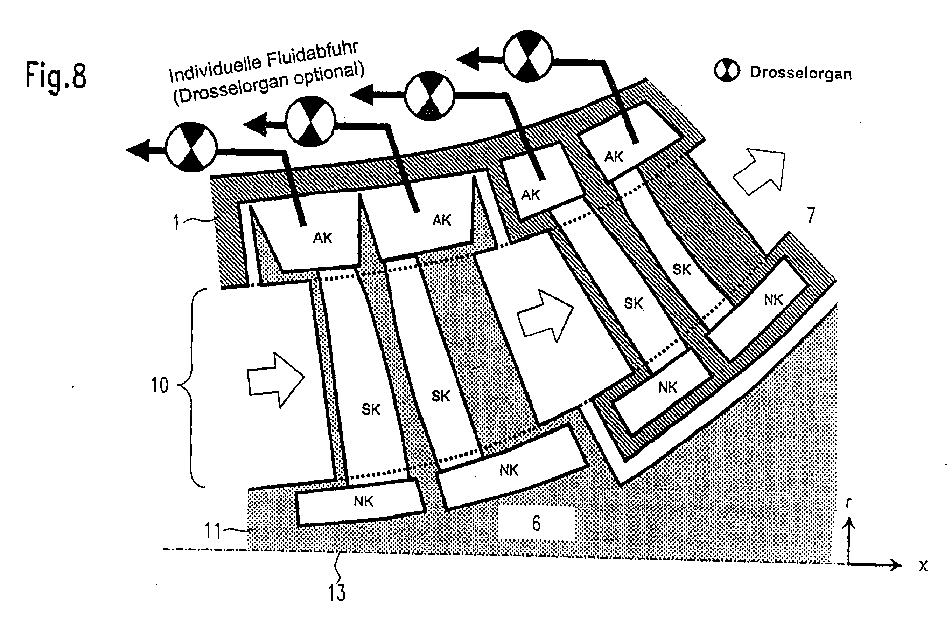

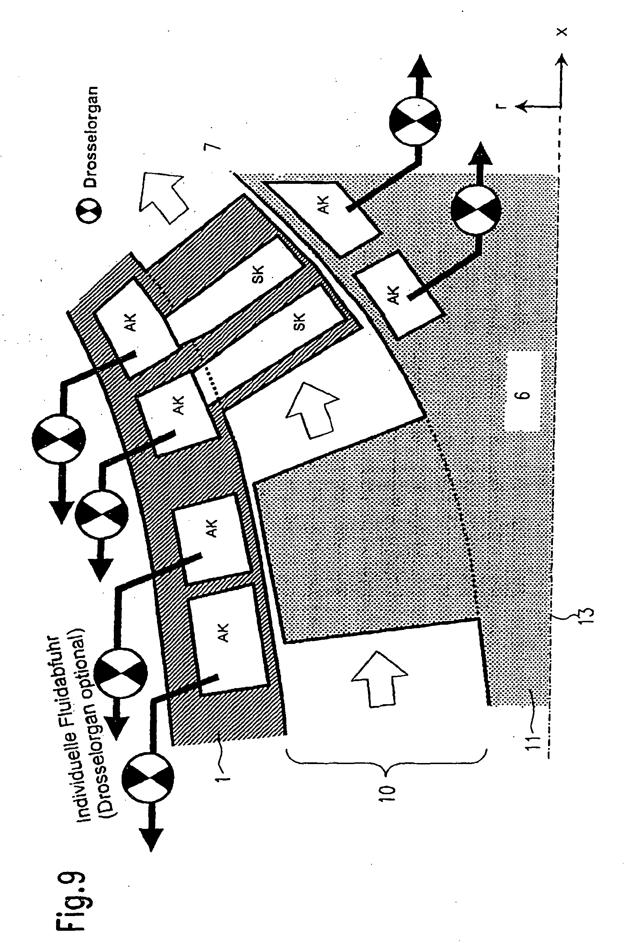

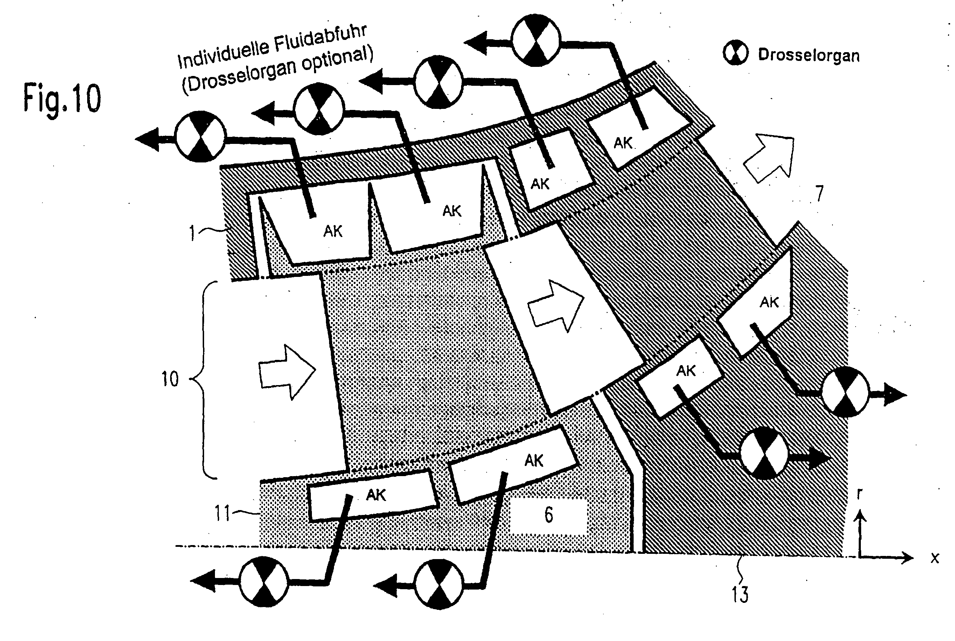

Die Fig. 8 bis 10 zeigen unterschiedliche Ausgestaltungsvarianten mit Konfigurationen, bei welchen Abfuhrkammern (AK), Schaufelinnenkammern (SK) und Nabenkammern (NK) vorgesehen sind.

Im Einzelnen zeigen die Fig. 8 bis 10 Ausgestaltungsvarianten, bei welchen den einzelnen Schaufelreihen jeweils mindestens eine Kammer am oder im Gehäuse zugeordnet ist, durch die Fluid von der Schaufelreihe entfernt wird (Abfuhrkammer AK). Für den Fall, dass mindestens eine weitere Kammer im Inneren mindestens einer Schaufel existiert, die sich über die Gesamtheit oder nur Teile der Schaufelhöhe erstreckt (Schaufelinnenkammer SK), kann jede Abfuhrkammer AK mit mindestens einer Schaufelinnenkammer SK in Verbindung stehen und von dort Fluid entgegennehmen. Besitzt die Schaufel eine feste Anbindung zur inneren Ringkanalkontur, so kann als letztes Kammerglied des zur Fluidentfernung konzipierten Gesamtströmungsweges mindestens eine Kammer an oder in der Nabe außerhalb des Ringkanals existieren (Nabenkammer NK), die mit mindestens einer Schaufelinnenkammer SK in Verbindung steht und dieser Fluid zuführt.

Besitzt die Schaufel ein freies Ende mit Radialspalt an der Nabe oder weist die Schaufel keine über die gesamte Schaufelhöhe reichende Schaufelinnenkammer auf, kann zur Fluidentfernung an der Nabe ebenfalls mindestens eine Abfuhrkammer an oder in der Nabe außerhalb des Ringkanals existieren.

Abfuhrkammern und Nabenkammern erstrecken sich über die Gesamtheit oder nur Teile des Maschinenumfangs. Die Abfuhrkammern dienen der Wegleitung des Fluids von der betreffenden Schaufelreihe, wobei die Schaufelinnenkammern und die Nabenkammern Hilfsmittel sind, um den Zugang zu den relevanten Schaufelspitzen- und Ringkanaloberflächen (SRO) der betreffenden Schaufelreihe herzustellen.

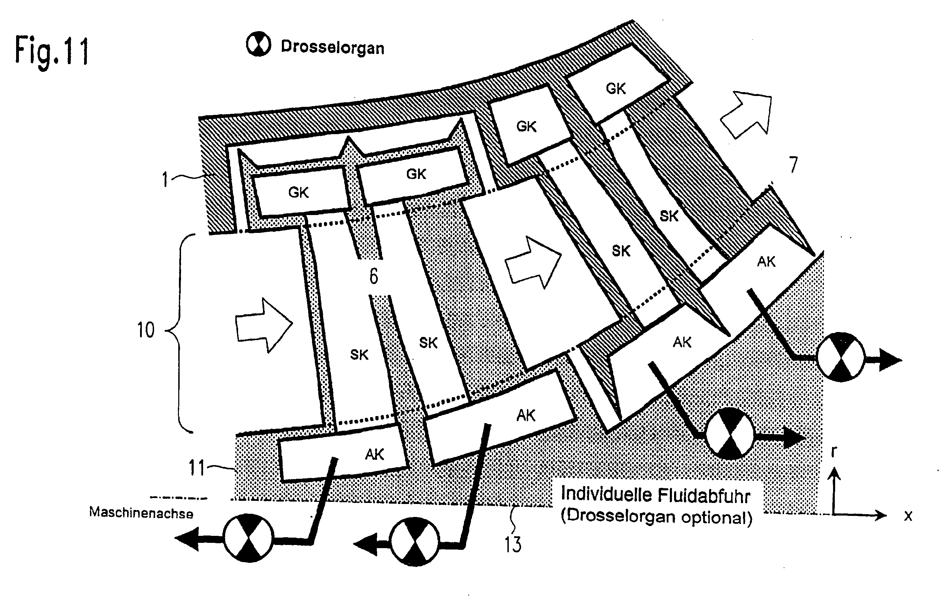

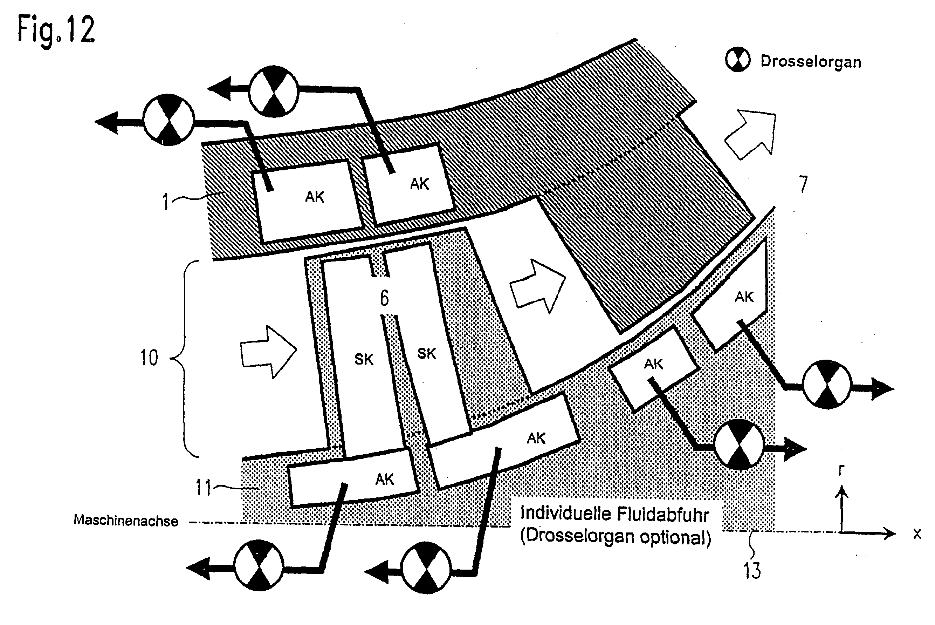

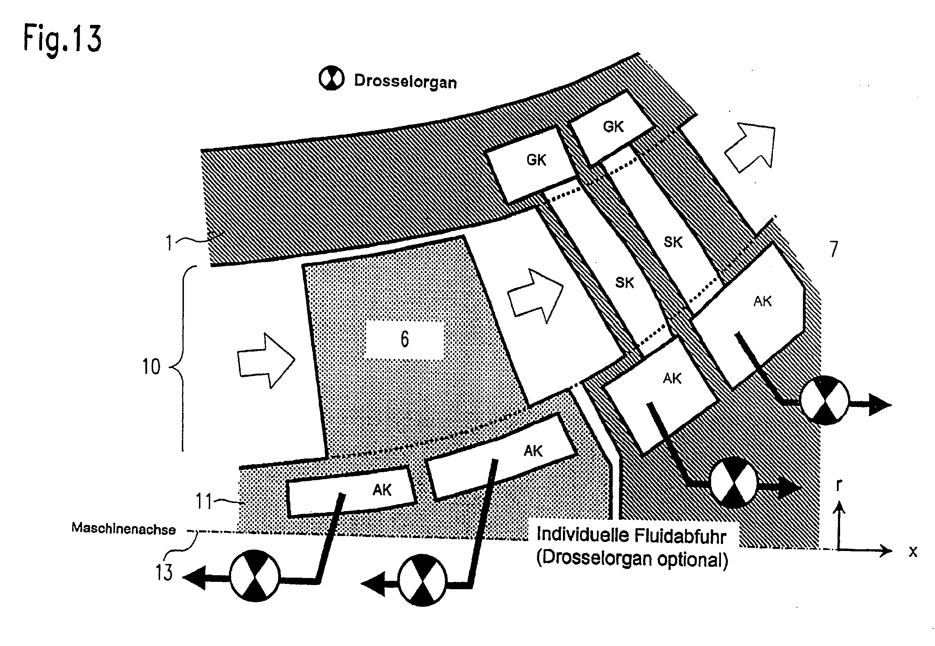

Während in den Fig. 8 bis 10 Ausgestaltungsformen gezeigt wurden, bei welchen mindestens eine Abfuhrkammer am oder im Gehäuse angeordnet ist, zeigen die Fig. 11 bis 13 Ausgestaltungsformen, bei welchen mindestens eine Kammer an oder in der Nabe angeordnet ist, durch die Fluid von der Schaufelreihe entfernt wird (Abfuhrkammer AK). Für den Fall, dass mindestens eine weitere Kammer im Inneren mindestens einer Schaufel existiert, die sich über die Gesamtheit oder nur Teile der Schaufelhöhe erstreckt (Schaufelinnenkammer SK), kann jede Abfuhrkammer AK mit mindestens einer Schaufelinnenkammer SK in Verbindung stehen und von dort Fluid entgegennehmen. Besitzt die Schaufel eine feste Anbindung zur äußeren Ringkanalkontur, so kann als letztes Kammerglied des zur Fluidentfernung konzipierten Gesamtströmungsweges mindestens eine Kammer am oder im Gehäuse außerhalb des Ringkanals existieren (Gehäusekammer GK), die mit mindestens einer Schaufelinnenkammer SK in Verbindung steht und dieser Fluid zuführt.

Besitzt die Schaufel ein freies Ende mit Radialspalt am Gehäuse oder weist die Schaufel keine über die gesamte Schaufelhöhe reichende Schaufelinnenkammer SK auf, kann zur Fluidentfernung am Gehäuse ebenfalls mindestens eine Abfuhrkammer am oder im Gehäuse außerhalb des Ringkanals existieren.

Die Abfuhrkammern und die Gehäusekammern erstrecken sich über die Gesamtheit oder nur Teile des Umfangs der Strömungsarbeitsmaschine.

Die Abfuhrkammern dienen zur Wegleitung des Fluids von der betreffenden Schaufelreihe. Die Schaufelinnenkammern und die Gehäusekammern sind Hilfsmittel, um den Zugang zu relevanten Schaufelspitzen- und Ringkanaloberflächen (SRO) im Bereich der betreffenden Schaufelreihe herzustellen.

Es ist vorgesehen, dass bei einer Schaufelreihe der im Zusammenhang mit den Fig. 8 bis 10 bzw. 11 bis 13 beschriebenen Ausgestaltungsformen an mindestens einer Schaufelspitzen- und Ringkanaloberfläche (SRO) an mindestens einer ihrer Schaufeln und/oder mindestens einem ihrer den Ringkanal begrenzenden Bauteile mindestens eine Fluidentnahmevorrichtung vorgesehen ist, die eine Verbindung zwischen der Schaufelspitzen- und Ringkanaloberfläche (SRO) und einer Abfuhrkammer AK, einer Schaufelinnenkammer SK, einer Nebenkammer NK oder einer Gehäusekammer GK herstellt. Die konstruktive Ausführung der Fluidentnahmevorrichtung erfolgt durch mechanische, chemische oder thermische Materialabtragsverfahren an dem die Schaufelspitzen- und Ringkanaloberfläche (SRO) bildenden Bauteil.

In einer alternativen Ausgestaltung der Erfindung erhält die Fluidentnahmevorrichtung ihre Begrenzungen durch die Kombination mindestens zweier vorbereiteter Einzelbauteile, die lose oder fest zusammengefügt werden.

Im Folgenden wird die Erfindung selbst beschrieben.

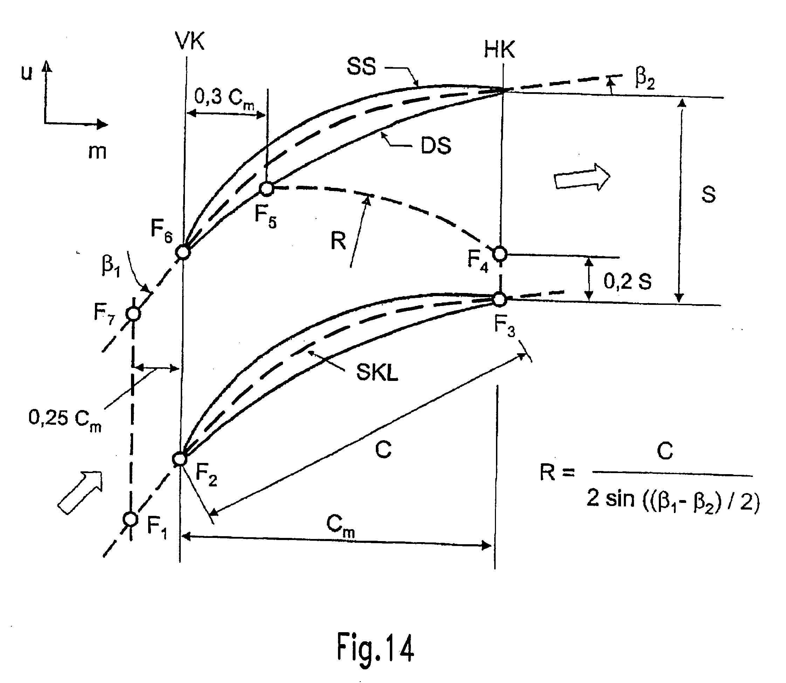

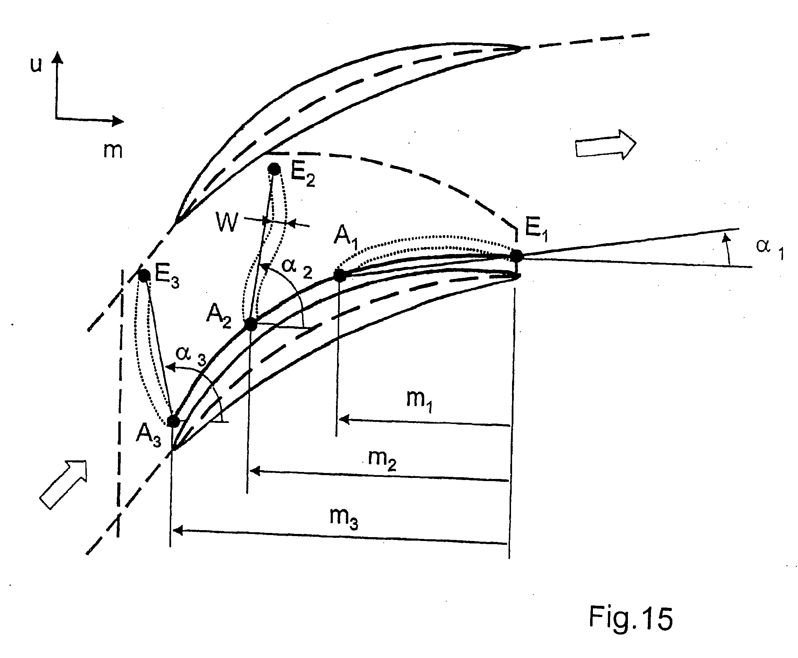

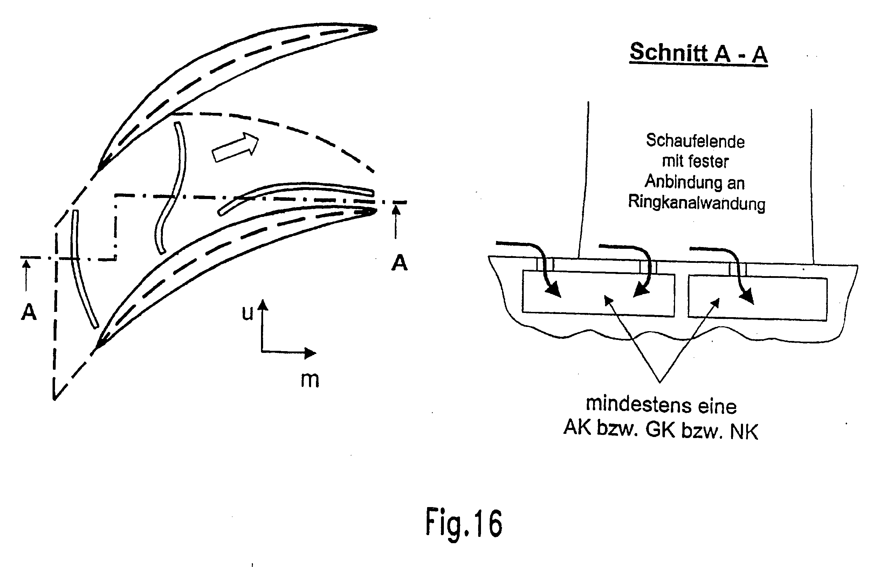

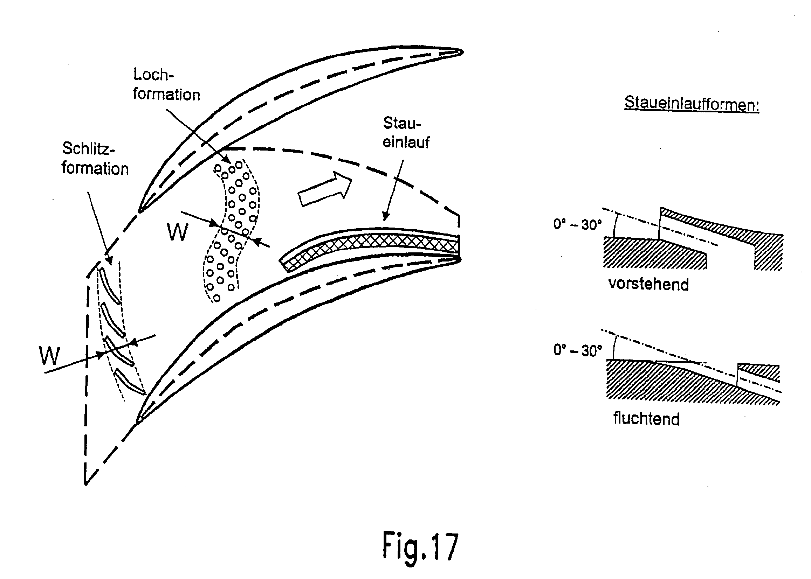

Die Fig. 14 bis 17 zeigen erfindungsgemäße Ausführungsbeispiele für die Fluidentnahmevorrichtung an Schaufelspitzen- und Ringkanaloberflächen (SRO) des Typs A (Fig. 14), beispielhaft für den Fall N = 3 (Fig. 15) sowie beispielhaft für den Fall N = 3 (drei Schlitze oder Ersatzelemente), siehe Fig. 16 und 17.

Bei den somit in den Fig. 14 bis 17 gezeigten Ausführungsbeispielen der Fluidentnahmevorrichtung an Schaufelspitzen- und Ringkanaloberflächen (SRO) des Typs A sind Konfigurationen von Schlitzen bzw. funktional ähnlichen Ersatzelementen im vorderen Teil der Schaufelpassage gezeigt. Einzelne Schlitze (bzw. Ersatzelemente) können unterschiedlichen Abfuhr-, Gehäuse- oder Nabenkammern zugeordnet sein. Dabei ergibt sich Folgendes:

Betrachtet man die Ringkanaloberfläche in dem aus Meridianstromlinienrichtung und Umfangsrichtung gebildeten Koordinatensystem (m,u), so befindet sich eine Konfiguration von Schlitzen in einem Segment der Ringkanalwand, das durch den Kurvenzug F1-F2-F3-F4-F5-F6-F7-F1 umschlossen wird.

Die Strecke F1-F2 stellt, ebenso wie die Strecke F6-F7, eine tangentiale Verlängerung der Profilskelettlinie SKL gegen die Strömungsrichtung dar. Die Strecke F1-F7 liegt 25 % der meridionalen Profilsehnenlänge (0.25 *Cm) vor der Vorderkantenebene. Die Strecke F2-F3 ist durch die Saugseitenkontur SS zwischen Vorderkante VK und Hinterkante HK gegeben. Die Strecke F3-F4 verläuft in der Hinterkantenebene vom Profil bis zu einem Punkt bei 20 % der austrittseitigen Schaufelteilung (0,2 * S) in Richtung der Druckseite des benachbarten Profils. Die Strecke F4-F5 ist ein Kreisbogen, dessen Radius R sich aus der Profilsehnenlänge C und den Ein- und Austrittswinkeln beta1 und beta2 berechnet nach R = C / (2 * sin ((beta1 - beta2) / 2)). Die Strecke F5-F6 ist durch einen Teil der Druckseitenkontur DS zwischen der Vorderkante VK und einem um 30 % der meridionalen Profilsehnenlänge in der Schaufelpassage gelegenen Punkt gegeben.

Eine Anzahl von mindestens 2 Schlitzen (Anzahl N > 1) bildet eine besondere Anordnung, die sich etwa orthogonal zum Verlauf der zu erwartenden Grenzschichtströmung ausrichtet. Das Konzept geht aus von einem entlang der Saugseite SS orientierten Schlitz, der bis zur Hinterkantenebene reicht, aber mit steigender Anzahl weiterer vorgesehener Schlitze kürzer wird. Weitere Schlitze sind um so stärker gegen die Meridianströmungsrichtung m geneigt, je näher sie am Eintritt des Schaufelkanals liegen. Alle Schlitze sind definiert durch einen Anfangspunkt, einen Endpunkt und eine Winkelangabe für die von Anfangs- zu Endpunkt reichende Hilfsgerade. Die Anfangspunkte befinden sich auf einer Basislinie, die entweder durch die Saugseitenkontur selbst oder eine an der Saugseitenkontur orientierten Linie gegeben ist, die in Umfangsrichtung u aber an keiner Stelle weiter als 20 % der austrittseitigen Schaufelteilung (0,2 * S) von ihr entfernt liegt. Die Lage aller Anfangspunkte ist durch die Basislinie und einen meridionalen Abstand zur Hinterkantenebene festgelegt.

Der meridionale Hinterkantenabstand m(i) eines Anfangspunktes A(i) des Schlitzes mit der Nummer (i) beträgt m(i) = (i + 1) * Cm / (N + 1). Für m(i) gilt eine Toleranz von +/- 0,1 * Cm.

Der Neigungswinkel der Hilfsgeraden zwischen dem Anfangspunkt A(i) und dem Endpunkt E(i) eines Schlitzes mit der Nummer (i) beträgt alpha(i) = alpha 1 + (i - 1) * (110° - alpha 1) / (N - 1). Alpha 1 ist hier durch die Tatsache festgelegt, dass sowohl Anfangs- als auch Endpunkt des Schlitzes mit der Nummer 1 auf der Basislinie liegen. Für alpha (i) gilt eine Toleranz von +/- 20°.

Der Verlauf eines jeden Schlitzes ist gestützt durch die jeweilige Hilfsgerade, muss aber mit ihr lediglich in Anfangsund Endpunkt genau übereinstimmen. Alle Schlitze enden in den Grenzen des durch den Kurvenzug F1-F2-F3-F4-F5-F6-F7-F1 umschlossenen Ringkanalwandsegmentes.

Sie verlaufen zwischen Anfangspunkt und Endpunkt geradlinig, einfach gekrümmt oder mehrfach gekrümmt. Sie besitzen eine konstante oder in ihrer Längsrichtung veränderliche Weite W, die aber stets kleiner als 10 % der austrittseitigen Schaufelteilung bleibt (W < 0,1 * S). Sie weisen eckige, angefaste oder gerundete Oberflächenkanten auf. Sie besitzen an Anfangsund Endpunkt eine eckige Form oder einen runden (langlochähnlichen) Abschluss. Die Schlitze führen senkrecht oder schräg zur Ringkanaloberfläche durch das Wandmaterial in eine Abfuhrkammer AK, eine Nabenkammer NK oder eine Gehäusekammer GK.

In einer abgewandelten Form tritt - bei gleichen Regeln hinsichtlich der Positionierung und des Verlaufes an der Ringkanaloberfläche sowie der Beschaffenheit der Oberflächenkanten und Orientierung in der Ringkanalwand - an die Stelle mindestens eines Schlitzes eine Formation aus mehreren geraden oder gekrümmten Schlitzen mit einer maximalen Weite W der Schlitzkonfiguration von 15 % der austrittseitigen Schaufelteilung (W < 0,15 * S).

In einer anderen abgewandelten Form tritt - bei gleichen Regeln hinsichtlich der Positionierung und des Verlaufes an der Ringkanaloberfläche sowie der Beschaffenheit der Oberflächenkanten und Orientierung in der Ringkanalwand - an die Stelle mindestens eines Schlitzes eine ein- oder mehrreihige Formation von Löchern mit einer maximalen Weite W der Lochkonfiguration von 15 % der austrittseitigen Schaufelteilung (W < 0,15 * S).

In einer anderen abgewandelten Form ist - bei gleichen Regeln hinsichtlich der Positionierung und des Verlaufes an der Ringkanaloberfläche - mindestens ein Schlitz als Staueinlauf ausgeformt, **dadurch gekennzeichnet, dass** Fluid unter höchstens 30° zur Ringkanaloberfläche abgeführt wird.

Bei der erfindungsgemäßen Strömungsarbeitsmaschine wird somit ein bislang unerreichtes Maß an Grenzschichtbeeinflussung erzielt. Dies ist bei unterschiedlichsten Arten von Strömungsarbeitsmaschinen, wie etwa Bläsern, Verdichtern, Pumpen und Ventilatoren oder auch Propellern und Schiffsschrauben möglich. Je nach Ausführungsvariante sind erfindungsgemäß eine aerodynamische Belastung und eine Strömungsumlenkung möglich, die bis zu 50% über den nach dem Stand der Technik erreichten Werten liegen. Für festgeschriebene Leistungswerte einer Strömungsarbeitsmaschine lässt sich unter Beibehaltung oder Verbesserung des Wirkungsgrades von bis zu 1% die Anzahl der verbauten Teile um etwa 30% gegenüber einer konventionellen Bauweise senken. Dabei sinken die Kosten um 10% bis 15%. Bei Einsatz eines neuen Schaufelkonzeptes im Verdichter eines Flugtriebwerks mit rund 25.000 Pfund Schub ergibt sich erfindungsgemäß eine Reduzierung des spezifischen Kraftstoffverbrauchs von bis zu 0,5% und eine Gewichtsersparnis von rund 5%.

## Bezugszeichenliste

| | |
|---|---|
| 1 | Gehäuse |
| 2 | Schaufel |
| 3 | Schlitz |
| 4 | Schlitz |
| 5 | Stator |
| 6 | Rotor |
| 7 | Stator |
| 8 | Rotorschaufel |
| 9 | Statorschaufel |
| 10 | Ringkanal |
| 11 | Rotortrommel (Nabe) |
| 12 | Rotortrommel (Nabe) |
| 13 | Maschinenachse |

## Patentansprüche

1. Strömungsarbeitsmaschine mit zumindest einem Rotor (6), der mehrere an einer rotierenden Welle befestigte Rotorschaufeln (8) umfasst, sowie mit einem einen Ringkanal bildenden Gehäuse (1), welches unter Durchströmung des Rotors (6) und/oder eines Stators (7) von einem Fluid durchströmt wird,
wobei Mittel zur Entnahme von Fluid an mindestens einer Schaufel (8,9) einer Schaufelreihe des Rotors (6) und/oder des Stators (7) an aerodynamisch kritischen Orten auf Schaufelspitzen- und Ringkanaloberflächen (SRO) vorgesehen sind,
wobei zur gezielten Beeinflussung der dreidimensionalen Strömung im Bereich der Schaufelenden die Mittel zur Entnahme von Fluid an Schaufelspitzen- und Ringkanaloberflächen (SRO) an Oberflächen der Naben- oder Gehäusekontur des Ringkanals (10) im Bereich einer festen Verbindung zur Schaufel zwischen der Hinterkantenebene (HK) der Schaufel und einer 25% der meridionalen Schaufelsehnenlänge stromauf der Vorderkante (VK) befindlichen Ebene am Rotor (6) oder am Stator (7) ausgebildet sind,
wobei die Mittel zur Fluidentnahme bei Betrachtung der Ringkanaloberfläche in dem aus Meridianströmungsrichtung m und Umfangsrichtung u gebildeten Koordinatensystem in einer durch den Kurvenzug F1-F2-F3-F4-F5-F6-F7-F1 umschlossenen Zone ausgebildet sind, wobei

1.) die Strecken F1-F2 und F6-F7 eine tangentiale Verlängerung der Profilsskelettlinie gegen die Anströmrichtung darstellen,

2.) die Strecke F1-F7 um 25% der meridionalen Profilsehnenlänge stromauf der Vorderkantenebene liegt,

3.) die Strecke F2-F3 durch die Saugseitenkontur der Schaufel zwischen der Vorderkante und der Hinterkante gegeben ist,

4.) die Strecke F3-F4 in der Hinterkantenebene vom Profil bis zu einem Punkt bei 20% der in der Hinterkantenebene bestimmten Schaufelteilung S in Richtung der Druckseite des gegenüber liegenden Schaufelprofils führt,

5.) die Strecke F4-F5 durch einen Kreisbogen gebildet ist, dessen Radius R sich aus der Profilsehnenlänge C und den Vorder- und Hinterkantenwinkeln des Profils $\beta_1$ und $\beta_2$ berechnet nach $R = C / (2*\sin((\beta_1 - \beta_2)/2)$,

6.) die Strecke F5-F6 durch einen Teil der Druckseitenkontur zwischen der Vorderkante VK und einem um 30% der meridionalen Sehnenlänge des Schaufelprofils innerhalb der Schaufelpassage gelegenen Punkt gegeben ist,

wobei die Mittel zur Fluidentnahme durch Öffnungselemente aus einer Öffnungselementegruppe, umfassend einen Schlitz, eine Reihe von lochartigen Ausnehmungen mit einer maximalen Weite W der Lochkonfiguration von 15 % der austrittsseitigen Schaufelteilung ($W < 0,15 * S$) oder einen als Staueinlauf ausgeformten Schlitz, gebildet sind, wobei die Mittel zur Fluidentnahme durch eine Mehrzahl von Öffnungselementen aus der Öffnungselementegruppe gegeben sind,

wobei die Anordnung jedes Öffnungselements durch einen Anfangspunkt A und einen Endpunkt E sowie eine Neigung der durch die Punkte A und E verlaufenden Hilfsgerade zur Meridianstromlinienrichtung m definiert ist, wobei jeder Anfangspunkt A eines Öffnungselements auf einer Basislinie im Bereich zwischen der Saugseitenkontur selbst und einer im Abstand von 20% der austrittsseitigen Schaufelteilung S von der Saugseitenkontur definierten Grenze angeordnet ist,

wobei (i) der Laufindex der Öffnungselemente ist und entgegen der Passagenströmungsrichtung als ansteigend definiert ist, wobei N die Anzahl der vorgesehenen Öffnungselemente ($N > 1$) ist, wobei der meridionale Hinterkantenabstand m(i), d.h. der Abstand eines jeden Anfangspunktes A(i) eines Öffnungselements (i) von der Hinterkantenebene entgegen der Meridionalströmungsrichtung, gemäß folgender Regel festgelegt ist:

$$\{ C_m*(i+1)/(N+1) \} - 0,1*C_m < m(i) < \{ C_m*(i+1)/(N+1) \} + 0,1*C_m,$$

und

wobei die Neigung eines Öffnungselements durch den Winkel $\alpha(i)$, gemessen entgegen des Drehsinnes der Strömungsumlenkung der Schaufelreihe zwischen der Meridionalströmungsrichtung m und der Hilfsgerade, erfasst wird, wobei der Neigungswinkel $\alpha(i)$ eines Öffnungselements (i) gegeben ist durch:

$$\{ \alpha_1 + (i-1)*(110° - \alpha_1)/(N-1) \} -20° < \alpha(i) < \{ \alpha_1 + (i-1)*(110° - \alpha_1)/(N-1) \} +20°,$$

wobei $\alpha_1$ dadurch festgelegt ist, dass für i=1 Anfangspunkt und Endpunkt auf der Basislinie liegen.

## Claims

1. Fluid-flow machine with at least one rotor (6), which includes several rotor blades (8) attached to a rotating shaft and with a casing (1) which forms an annulus and is passed by a fluid flowing through the rotor (6) and/or a stator (7), with means for the removal of fluid on at least one blade (8,9) of a blade row of the rotor (6) and/or the stator (7) being provided on aerodynamically critical points on blade tip and annulus surfaces (SRO),

with the means for fluid removal on blade tip and annulus surfaces (SRO) - for specifically influencing the three-dimensional flow in the area of the blade ends - being provided on surfaces of the hub or casing contour of the annulus (10) in the region of a fixed connection to the blade between the trailing edge plane (HK) of the blade and a plane located at 25 % of the meridional blade chord length upstream of the leading edge (VK) on the rotor (6) or the stator (7),

with the means for fluid removal, when viewing the annulus surface in the coordinate system established by the meridional flow direction m and the circumferential direction u, being provided in a zone enclosed by the series of curves F1-F2-F3-F4-F5-F6-F7-F1, with

1.) the line segments F1-F2 and F6-F7 representing a tangential extension of the profile skeleton line against the inflow direction,

2.) the line segment F1-F7 being arranged at 25% of the meridional profile chord length upstream of the leading-edge plane,

3.) the line segment F2-F3 being determined by the suction-side contour of the blade between the leading edge and the trailing edge,

4.) the line segment F3-F4 extending in the plane of the trailing edge of the profile up to a point provided at 20 % of the blade pitch S defined in the trailing-edge plane in the direction of the pressure side of the opposite blade profile,

5.) the line segment F4-F5 being formed by a circle arc, the radius R of which is calculated from the profile chord length C and the leading and trailing edge angles of the profile $\beta_1$ and $\beta_2$ in accordance with $R = C / (2*\sin\{(\beta_1 - \beta_2,) /2\})$,

6.) the line segment F5-F6 being determined by a part of the pressure-side contour between the leading edge VK and a point situated at 30 % of the meridional chord length of the blade profile within the blade passage,

with the means for fluid removal being formed by opening elements from a group of opening elements including a slot, a row of hole-type recesses with a maximum width W of the hole configuration of 15% of the exit-side blade pitch ($W < 0.15 * S$) or a slot designed as a ram inlet,
with the means for fluid removal being provided by a plurality of opening elements of the group of opening elements,
with the arrangement of each opening element being defined by a starting point A and an end point E as well as by an inclination of the auxiliary line passing through the points A and E relative to the meridional flow line direction m,
with each starting point A of an opening element being arranged on a base line in the area between the suction-side contour proper and a limit defined by the suction-side contour at a distance of 20 % of the exit-side blade pitch S,
with (i) being the running index of the opening elements and defined as ascending against the passage flow direction,
with N being the number of the opening elements provided (N>1), with the meridional trailing-edge distance m(i), i.e. the distance of each starting point A(i) of an opening element (i) from the trailing-edge plane against the meridional flow direction being defined as per the following rule:

$$\{ Cm*(i+1) / (N+1) \} - 0.1*Cm < m(i) < \{ Cm* (i+1) / (N+1) \} + 0.1*Cm,$$

and
with the inclination of an opening element being determined by the angle $\alpha$ (i) measured against the sense of rotation of the flow deflection of the blade row between the meridional flow direction m and the auxiliary line,
with the inclination angle $\alpha(i)$ of an opening element (i) being determined by

$$\{ \alpha_1 + (i-1)*(110° - \alpha_1) / (N-1) \} -20° < \alpha(i) < \{ \alpha_1 + (i-1)*(110° - \alpha_1) / (N-1) \} + 20°,$$

with $\alpha_1$ being determined by the fact that for i = 1 the starting and the end point are situated on the base line.

## Revendications

1. Machine à écoulement avec au moins un rotor (6) comprenant plusieurs aubes de rotor (8) fixées sur un arbre rotatif, ainsi qu'un carter (1) formant un canal annulaire qui est traversé par un fluide lors de l'écoulement dans le rotor (6) et/ou dans un stator (7),
sachant que des moyens destinés à prélever du fluide à au moins une aube (8, 9) d'une rangée d'aubes du rotor (6) et/ou du stator (7) sont prévus à des points aérodynamiquement critiques sur des surfaces des bouts d'aubes et du canal annulaire (SRO),
sachant que pour influencer de manière ciblée le flux tridimensionnel dans la zone des extrémités des aubes, les moyens destinés à prélever du fluide sur des surfaces des bouts d'aubes et du canal annulaire (SRO) sont formés sur des surfaces du contour du moyeu ou du carter du canal annulaire (10) sur le rotor (6) ou le stator (7) dans la zone d'une jonction fixe par rapport à l'aube entre le plan du bord de fuite (HK) de l'aube et un plan situé à 25 % de la longueur de corde méridienne de l'aube en amont du bord d'attaque (VK),

sachant qu'en observant la surface du canal annulaire dans le système de coordonnées formé par le sens d'écoulement méridien m et le sens circonférentiel u, les moyens destinés à prélever du fluide sont formés dans une zone entourée par la série de segments de courbes F1-F2-F3-F4-F5-F6-F7-F1, où

1.) les segments F1-F2 et F6-F7 représentent un prolongement tangentiel de la ligne moyenne de profil dans le sens contraire au sens d'écoulement,

2.) le segment F1-F7 se situe à 25 % de la longueur de corde méridienne du profil en amont du plan du bord d'attaque,

3.) le segment F2-F3 est déterminé par le contour côté aspiration de l'aube entre le bord d'attaque et le bord de fuite,

4.) le segment F3-F4 s'étend dans le plan du bord de fuite du profil jusqu'à un point prévu à 20 % du pas des aubes S défini dans le plan du bord de fuite en direction du côté refoulement du profil d'aube opposé,

5.) le segment F4-F5 est formé par un arc de cercle, dont le rayon R se calcule de la longueur de corde du profil C et des angles des bords d'attaque et de fuite du profil $\beta_1$ et $\beta_2$ selon R = C / (2*sin {($\beta_1$ - $\beta_2$,)/2),

6.) le segment F5-F6 est déterminé par une partie du contour du côté refoulement entre le bord d'attaque VK et un point situé à 30 % de la longueur de corde méridienne du profil d'aube dans le passage d'aube,

sachant que les moyens destinés à prélever du fluide sont formé par des d'éléments d'ouverture d'un groupe d'éléments d'ouverture comprenant une fente, une série d'évidements en forme d'orifices avec une largeur maxi. W de la configuration d'orifices égale à 15 % du pas des aubes côté sortie (W < 0,15 * S), ou une fente en forme de prise dynamique de fluide,

sachant que les moyens destinés à prélever du fluide sont constitués par une pluralité d'éléments d'ouverture du groupe d'éléments d'ouverture,

sachant que la disposition de chaque élément d'ouverture est définie par un point initial A et un point final E ainsi que par une inclinaison par rapport à la direction de la ligne d'écoulement méridienne m de la droite auxiliaire passant par les points A et E, sachant que chaque point initial A d'un élément d'ouverture est situé sur une ligne de base dans la zone entre le contour côté aspiration lui-même et une limite définie par le contour côté aspiration à une distance égale à 20 % du pas des aubes S du côté sortie, sachant que (i) est l'indice courant des éléments d'ouverture et est défini comme ascendant dans le sens contraire au sens d'écoulement de passage, sachant que N est le nombre des éléments d'ouverture prévus (N>1), que la distance méridienne du bord de fuite m(i), c.-à-d. la distance de chaque point initial A(i) d'un élément d'ouverture (i) au plan du bord de fuite dans le sens contraire au sens d'écoulement méridien, est définie conformément à la règle suivante :

$$\{ Cm*(i+1) / (N+1) \} - 0,1*Cm < m(i) < \{ Cm* (i+1) / (N+1) \} + 0,1*Cm,$$

et

sachant que l'inclinaison d'un élément d'ouverture est déterminée par l'angle $\alpha$ (i), mesuré dans le sens contraire au sens de rotation de la déviation d'écoulement de la rangée d'aubes entre le sens d'écoulement méridien m et la droite auxiliaire,

que l'angle d'inclinaison $\alpha$ (i) d'un élément d'ouverture (i) est déterminé par :

$$\{ \alpha_1 + (i-1)*(110° - \alpha_1) / (N-1) \} -20° < \alpha(i) < \{ \alpha_1 + (i-1)*(110° - \alpha_1) / (N-1) \} + 20°,$$

sachant que $\alpha_1$ est déterminé par le fait que pour i = 1 le point initial et le point final sont situés sur la ligne de base.

Fig.1

Fig.2

EP 2 249 044 B1

# Gezielte Fluidentnahme an Schaufelspitzen- und Ringkanaloberflächen (SRO), Funktionsmuster 1 bis 4

## Fig.3

EP 2 249 044 B1

## Gezielte Fluidentnahme an Schaufelspitzen- und Ringkanaloberflächen (SRO), Funktionsmuster 5 bis 8

Fig.4

EP 2 249 044 B1

Fig.5

A.

Vor-leit-rad
Rotor n
Stator n
Rotor n+1
Stator n+1

10
11
13

r
x

B.

Rotor n
Rotor n+1
Stator n+1

10
11
13
12

r
x

C.

Rotor (n)
Stator (n) aussen
Stator (n) innen
Rotor (n+1)
Stator (n+1)

10
11
13

r
x

D.

Rotor (n)
Rotor (n+1)
Stator (n+1)
S (n)
R (n+1)
S (n+1)

10
13
12

r
x

EP 2 249 044 B1

Fig.6

**Fig.7**

a. Rotor mit Außendeckband

b. Rotor mit Laufspalt und freien Blattspitzen

c. Stator mit Innendeckband

d. Stator mit Laufspalt (innen) und freien Schaufelspitzen

e. Stator mit Standspalt (innen) und freien Schaufelspitzen

f. Stator mit Standspalt (außen) und freien Schaufelspitzen

g. Stator mit zweifacher Befestigung

——— Ruhendes Bauteil

········· Rotierendes Bauteil

Fig.8

Individuelle Fluidabfuhr
(Drosselorgan optional)

Drosselorgan

1

10

11

13

AK

AK

AK

AK

SK

SK

SK

SK

NK

NK

NK

6

7

r

x

EP 2 249 044 B1

Fig.9

**Fig.10**

Individuelle Fluidabfuhr
(Drosselorgan optional)

⊗ Drosselorgan

EP 2 249 044 B1

# Fig.11

⊗ Drosselorgan

EP 2 249 044 B1

# Fig.12

⊗ Drosselorgan

AK

AK

AK

AK

AK

AK

SK  SK

6

1

10

11

7

13

Maschinenachse

Individuelle Fluidabfuhr
(Drosselorgan optional)

r

x

EP 2 249 044 B1

Fig.13

⊗ Drosselorgan

GK

GK

GK

SK

SK

AK

AK

AK

AK

6

1

10

11

7

13

Maschinenachse

Individuelle Fluidabfuhr
(Drosselorgan optional)

r

x

EP 2 249 044 B1

Fig.14

$$R = \frac{C}{2 \sin ((\beta_1 - \beta_2) / 2)}$$

EP 2 249 044 B1

Fig.15

## Schnitt A - A

Schaufelende
mit fester
Anbindung an
Ringkanalwandung

mindestens eine
AK bzw. GK bzw. NK

u

m

**Fig.16**

Fig.17

EP 2 249 044 B1

**IN DER BESCHREIBUNG AUFGEFÜHRTE DOKUMENTE**

**In der Beschreibung aufgeführte Patentdokumente**

- US 2870957 A
- US 2720356 A
- US 3694102 A
- US 3993414 A
- US 5904470 A
- US 5480284 A
- FR 1521512 A
- CH 561844 A5
- DE 69105418 T2

**In der Beschreibung aufgeführte Nicht-Patentliteratur**

- **SCHULER et al.** *Design, Analysis, Fabrication and Test of an Aspirated Fan Stage, ASME Paper 2000-GT-618*
- **MERCHANT et al.** Aerodynamic Design and Analysis of a High Pressure Ratio Aspirated Compressor Stage. *ASME Paper 2000-GT-619*